# FASCICULE DE BREVET EUROPEEN

(11) **EP 3 035 135 B1**
(45) Date de publication et mention de la délivrance du brevet: **20.05.2020**
(21) Numéro de dépôt: 15201096.3
(22) Date de dépôt: 18.12.2015
(51) Int. Cl.: G05B 9/02, B61L 15/00, G06F 11/07, G06F 11/14, G06F 11/16

(54) **PROCÉDÉ D'ARRÊT D'URGENCE ET SYSTÈME SÉCURITAIRE ASSOCIÉ**
NOTABSCHALTUNGSVERFAHREN UND ENTSPRECHENDES SICHERHEITSSYSTEM
A METHOD FOR EMERGENCY STOP AND ASSOCIATED SECURITY SYSTEM

(30) Priorité: 19.12.2014 FR 1462968
(43) Date de publication de la demande: 22.06.2016
(73) Titulaire: CLEARSY, 13857 Aix-en-Provence (FR)
(72) Inventeur: SABATIER, Denis, 13090 AIX-EN-PROVENCE (FR); PATIN, Florent, 01600 SAINT-BERNARD (FR)
(74) Mandataire: Lavoix

(56) Documents cités:
- EP-A1- 2 085 839
- WO-A1-2006/051355
- US-A1- 2005 283 712
- US-B1- 7 047 440

## Description

La présente invention concerne un procédé d'arrêt d'urgence d'un organe sécurisé d'un ensemble sécuritaire, l'ensemble sécuritaire comprenant l'organe sécurisé et un système sécuritaire. La présente invention se rapporte aussi au système sécuritaire associé.

Dans le domaine des systèmes électriques, il est connu d'essayer de chercher à limiter les risques de pannes. La norme SIL, acronyme de « Security Integrity Level » signifiant niveau d'intégrité de sécurité, sert à apprécier la fiabilité des fonctions de sécurité des systèmes électriques et électroniques programmables. Un SIL est défini comme un niveau relatif de réduction de risques inhérents à une fonction de sécurité, ou comme spécification d'une cible de réduction de risque. Plus simplement, c'est une mesure de la performance attendue pour une fonction de sécurité. La norme SIL est définie selon quatre niveaux de sécurité. Le niveau le plus élevé est le niveau SIL4.

Dans le domaine de la sécurité ferroviaire, un niveau SIL 4 est souvent requis, par exemple, pour le freinage des trains ou pour l'ouverture de portes palières.

Pour respecter un tel niveau sécuritaire, il convient de sécuriser au mieux les systèmes électroniques contrôlant des organes sécurisés constituant, par exemple, des organes d'ouverture et de fermeture des portes de wagon ou de quai.

Pour améliorer le niveau de sécurité d'un système électronique, il est connu d'utiliser un microprocesseur de contrôle vérifiant l'état d'un autre microprocesseur de travail. Le microprocesseur de contrôle déclenche un arrêt des organes sécurisés et du système en cas de panne du microprocesseur de travail.

Cependant, dans le cas d'une défaillance du microprocesseur de contrôle, il existe un risque important de panne non détectée du système. En outre, certaines défaillances du microprocesseur de contrôle empêchent le déclenchement de l'arrêt des organes sécurisés.

Il existe donc un besoin pour un procédé d'arrêt plus fiable.

Pour cela, il est proposé un procédé d'arrêt d'urgence d'un organe sécurisé d'un ensemble sécuritaire selon la revendication 1, l'ensemble sécuritaire comprenant l'organe sécurisé et un système sécuritaire. Le système sécuritaire comprend un premier cœur. Le premier cœur comprend deux premiers programmes de calcul aptes à effectuer les mêmes opérations, et un premier programme d'arrêt propre à mettre en œuvre un arrêt d'urgence. Le système sécuritaire comprend également un deuxième cœur. Le deuxième cœur comprend deux deuxièmes programmes de calcul aptes à effectuer les mêmes opérations, et un deuxième programme d'arrêt propre à mettre en œuvre un arrêt d'urgence. Le procédé comprend une première étape de réalisation d'opérations sur les deux premiers programmes de calcul, chaque réalisation d'opérations sur un premier programme de calcul aboutissant à un premier résultat. Le procédé comprend également une première étape de comparaison des deux premiers résultats, une anomalie du premier cœur étant détectée si les deux premiers résultats diffèrent. Le procédé comprend aussi une première étape de déduction de l'état du système, à l'issue de laquelle si une anomalie du premier cœur est détectée, une troisième étape d'arrêt est mise en œuvre par le deuxième programme d'arrêt du deuxième cœur, si aucune anomalie du premier cœur n'est détectée, des deuxièmes étapes sont mises en œuvre. Les deuxièmes étapes comprennent une deuxième étape de réalisation d'opérations sur les deux deuxièmes programmes de calcul, chaque réalisation d'opérations sur un deuxième programme de calcul aboutissant à un deuxième résultat. Les deuxièmes étapes comprennent aussi une deuxième étape de comparaison des deux deuxièmes résultats, une anomalie du deuxième cœur étant détectée si les deux deuxièmes résultats diffèrent. Les deuxièmes étapes comprennent également une deuxième étape de déduction de l'état du système, à l'issue de laquelle si une anomalie du deuxième cœur est détectée, une quatrième étape d'arrêt est mise en œuvre par le premier programme d'arrêt du premier cœur, si aucune anomalie du deuxième cœur n'est détectée, les premières étapes sont itérées. Les premières étapes et les deuxièmes étapes sont itérées tant qu'aucune anomalie du premier cœur ou du deuxième cœur n'est détectée.

Suivant des modes de réalisation particuliers, le procédé d'arrêt d'urgence d'un organe sécurisé comprend une ou plusieurs des caractéristiques suivantes, prise(s) isolément ou suivant toute combinaison techniquement possible :
- le premier cœur comprend des programmes ayant des instructions, des tables de constantes, des registres de configuration, des circuits électroniques et des premiers éléments statiques, les premiers éléments statiques comprenant les instructions des programmes du premier cœur et au moins un élément choisi dans le groupe constitué par les tables de constantes du premier cœur, les registres de configuration du premier cœur et les circuits électroniques du premier cœur. Le deuxième cœur comprend des programmes ayant des instructions, des tables de constantes, des registres de configuration, des circuits électroniques et des deuxièmes éléments statiques, les deuxièmes éléments statiques comprenant les instructions des programmes du deuxième cœur et au moins un élément choisi dans le groupe constitué par les tables de constantes du deuxième cœur, les registres de configuration du deuxième cœur et les circuits électroniques du deuxième cœur. Le procédé comprend en outre une étape de mémorisation des premiers éléments statiques, une étape de mémorisation des deuxièmes éléments statiques, une première étape de vérification des premiers éléments statiques, une anomalie du premier cœur étant détectée si les premiers éléments statiques diffèrent des premiers éléments statiques du premier cœur mémorisés, et une deuxième étape de vérification des deuxièmes éléments statiques, une anomalie du deuxième cœur étant détectée si les deuxièmes éléments statiques du deuxième cœur diffèrent des deuxièmes éléments statiques du deuxième cœur mémorisés.
- le premier cœur comporte une première mémoire et est propre à mettre en œuvre une première série d'opérations prédéterminées aboutissant à un premier résultat connu et le deuxième cœur comporte une deuxième mémoire et est propre à mettre en œuvre une deuxième série d'opérations prédéterminées aboutissant à un deuxième résultat connu, et le procédé comprenant une étape de mémorisation du premier résultat connu, une étape de mémorisation du deuxième résultat connu, une première étape de calcul, durant laquelle le premier cœur effectue la première série d'opérations prédéterminées aboutissant à un premier élément calculé, une étape de comparaison du premier résultat connu au premier élément calculé, une anomalie du premier cœur étant détectée si le premier élément calculé et le premier résultat connu diffèrent, une deuxième étape de calcul, durant laquelle le deuxième cœur effectue la deuxième série d'opérations prédéterminées aboutissant à un deuxième élément calculé, et une étape de comparaison du deuxième résultat connu au deuxième élément calculé, une anomalie du deuxième cœur étant détectée si le deuxième élément calculé et le deuxième résultat connu diffèrent.
- le premier cœur comprend une première horloge, et le deuxième cœur comprend une deuxième horloge, le procédé comportant une première étape de contrôle du décalage des horloges, mise en œuvre par le deuxième cœur, une anomalie du premier cœur étant détectée si le décalage de la première horloge, par rapport à la deuxième horloge, est supérieur ou égal à un seuil de tolérance prédéterminé, et une deuxième étape de contrôle du décalage des horloges mise en œuvre par le premier cœur, une anomalie du deuxième cœur étant détectée si le décalage de la deuxième horloge, par rapport à la première horloge, est supérieur ou égal à un seuil de tolérance prédéterminé.
- chaque premier programme de calcul comprend un premier programme, une exécution nominale dudit au moins un premier programme générant des variations des données d'un premier ensemble de données, et chaque deuxième programme de calcul comprend un deuxième programme, une exécution nominale dudit au moins un deuxième programme générant des variations des données d'un deuxième ensemble de données, et dans lequel les première étapes sont appliquées pour toutes les variations du premier ensemble de données que l'exécution nominale dudit au moins un premier programme est propre à générer, chaque variation étant une réalisation d'opération, et les deuxièmes étapes sont appliquées pour toutes les variations du deuxième ensemble de données que l'exécution nominale dudit au moins un deuxième programme est propre à générer, chaque variation étant une réalisation d'opération.

- la première étape de comparaison des deux premiers résultats est mise en œuvre par le deuxième cœur et la deuxième étape de comparaison des deux deuxièmes résultats est mise en œuvre par le premier cœur.
- le premier cœur comprend, en outre, une première mémoire et le deuxième cœur comprend, en outre, une deuxième mémoire et dans lequel le premier programme d'arrêt comporte un premier programme d'effacement d'au moins une partie du contenu de la première mémoire, le deuxième programme d'arrêt comporte un deuxième programme d'effacement de la deuxième mémoire, la troisième étape d'arrêt comporte une étape d'effacement d'au moins une partie du contenu de la deuxième mémoire du deuxième cœur par le deuxième cœur, et la quatrième étape d'arrêt comporte une étape d'effacement d'au moins une partie du contenu de la première mémoire du premier cœur par le premier cœur.
- la troisième étape d'arrêt comporte une étape d'arrêt de transmission d'une instruction de poursuite au premier cœur et la quatrième étape d'arrêt comporte une étape d'arrêt de transmission d'une instruction de poursuite au deuxième cœur.
- chaque premier résultat comporte une pluralité de données ordonnées selon un indice croissant, chaque donnée correspondant à un indice identique pour les deux premiers programmes de calcul, la première étape de comparaison comprenant une comparaison pour chaque indice des données de chaque premier programme de calcul associées à l'indice particulier, une anomalie du premier cœur étant détectée si les valeurs diffèrent, et dans lequel chaque deuxième résultat comporte une pluralité de données ordonnées selon un indice croissant, chaque donnée correspondant à un indice identique pour les deux deuxièmes programmes de calcul, la deuxième étape de comparaison comprenant une comparaison pour chaque indice des données de chaque deuxième programme de calcul associées à l'indice particulier, une anomalie du deuxième cœur étant détectée si les valeurs diffèrent.

L'invention concerne aussi un système sécuritaire selon la revendication 10, le système sécuritaire comprenant un premier cœur comprenant deux premiers programmes de calcul aptes à effectuer les mêmes opérations, et un premier programme d'arrêt propre à mettre en œuvre un arrêt d'urgence. Le système sécuritaire comprend aussi un deuxième cœur comprenant deux deuxièmes programmes de calcul aptes à effectuer les mêmes opérations, et un deuxième programme d'arrêt propre à mettre en œuvre un arrêt d'urgence. Le système sécuritaire est propre à mettre en œuvre le procédé d'arrêt d'urgence tel que décrit précédemment.

D'autres caractéristiques et avantages de l'invention apparaîtront à la lecture de la description qui suit de modes de réalisation de l'invention, donnée à titre d'exemple uniquement et en référence aux dessins qui sont :
- figure 1, un schéma d'un ensemble sécuritaire comportant un système sécuritaire selon l'invention, et
- figure 2, un ordinogramme d'un exemple de mise en œuvre d'un procédé d'arrêt d'urgence de l'organe sécurisé de l'ensemble sécuritaire de la figure 1 selon un premier mode de réalisation.

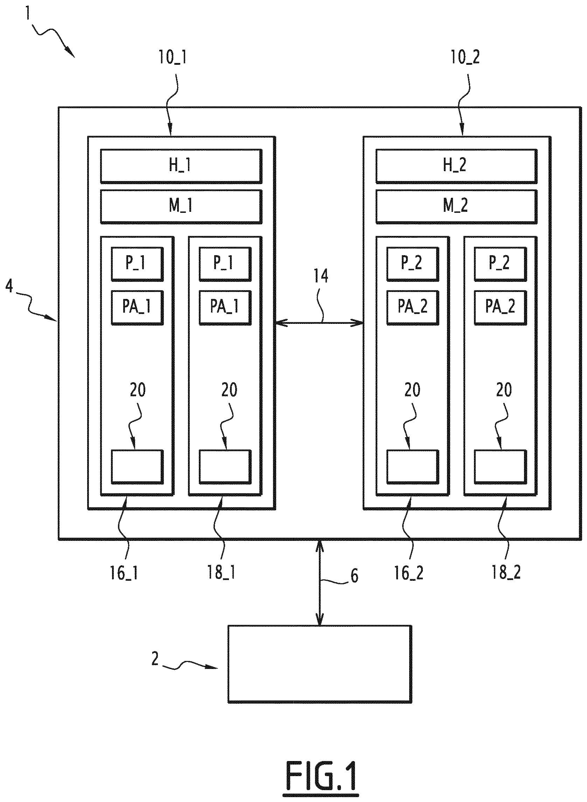

Un ensemble sécuritaire 1 est représenté sur la figure 1. L'ensemble sécuritaire 1 comprend un organe sécurisé 2 et un système sécuritaire 4 de traitement de données, selon l'invention.

Le système sécuritaire 4 et l'organe sécurisé 2 sont distincts et séparés physiquement. Le système sécuritaire 4 et l'organe sécurisé 2 sont, par exemple, aptes à échanger des données par l'intermédiaire d'un bus d'échange de données 6.

L'organe sécurisé 2 est, par exemple, un organe d'ouverture et de fermeture de portes de wagons.

L'organe sécurisé 2 présente, par exemple, un état de fonctionnement sécuritaire et un état d'arrêt sécuritaire. Par exemple, dans l'état d'arrêt sécuritaire de l'organe sécurisé 2, une alimentation de l'organe sécurisé 2 est coupée. En outre, l'organe sécurisé 2 est propre à être maintenu dans l'état d'arrêt sécuritaire, une fois que l'organe sécuritaire 2 est dans l'état d'arrêt sécuritaire.

Le système sécuritaire 4 est propre à assurer un fonctionnement sécuritaire de l'organe sécurisé 2 de l'ensemble sécuritaire 1.

Pour cela, le système sécuritaire 4 est notamment propre à mettre en œuvre un procédé d'arrêt d'urgence de l'organe sécurisé 2. L'arrêt d'urgence de l'organe sécurisé 2 permet le passage de l'organe sécurisé 2 dans l'état d'arrêt sécuritaire.

Le système sécuritaire 4 comprend un premier cœur 10_1 et un deuxième cœur 10_2.

Le premier cœur 10_1 et le deuxième cœur 10_2 sont distincts et séparés physiquement. En variante, les cœurs 10_1, 10_2 appartiennent au même processeur.

Le premier cœur 10_1 est apte à échanger des données avec le deuxième cœur 10_2 par l'intermédiaire d'une liaison d'échange de données 14, par exemple, un bus d'échange de données.

Le deuxième cœur 10_2 est identique au premier cœur 10_1.

Pour simplifier la description, seul le premier cœur 10_1 sera décrit en détail.

Le premier cœur 10_1 est propre à traiter des données. Par exemple, le premier cœur 10_1 est un processeur, notamment un microprocesseur. Le premier cœur 10_1 comprend des programmes ayant des instructions, des tables de constantes, des registres de configuration et des circuits électroniques.

L'exemple suivant permet d'illustrer chacun de ces termes pour en apporter une définition.

Dans l'exemple, un processeur comprend un programme destiné à activer un port de sortie à chaque fois que le processeur reçoit un certain nombre sur un bus série.

Un bus série est un ensemble de liaisons physiques permettant de transmettre des informations bit par bit.

Le programme de l'exemple comprend les instructions suivantes : « lire la valeur reçue sur le bus série», « si la valeur est inférieure à la valeur de seuil, mettre le port de sortie à 1 ».

La table de constante comprend, par exemple, les valeurs de seuil nécessaires au programme et les autres valeurs constantes nécessaires lors de l'initialisation du programme.

Le circuit électronique est un élément matériel capable de recevoir et d'exécuter les instructions du programme.

Dans l'exemple, un circuit électronique est apte à recevoir le nombre du bus série et à activer le port de sortie du processeur.

Un registre est une mémoire lue par le circuit électronique qui comprend les informations nécessaires au circuit électronique pour interpréter les instructions.

On appelle registres de configuration, les registres dont le contenu permet d'effectuer un réglage des éléments matériels.

Dans l'exemple, le registre de configuration comprend la vitesse à laquelle le circuit doit recevoir les valeurs sur le bus série. Lors de l'initialisation du processeur, les informations de vitesse sont chargées dans le registre de configuration à partir de la table de constante.

De plus, le premier cœur 10_1 comprend deux premiers programmes de calcul 16_1, 18_1, une première horloge H_1 et une première mémoire M_1.

Le premier cœur 10_1 est propre à assurer l'arrêt d'urgence de l'organe sécurisé 2.

Le premier cœur 10_1 est propre à détecter une anomalie, comme cela sera décrit par la suite.

En outre, le premier cœur 10_1 est propre à transmettre une instruction de poursuite au deuxième cœur 10_2. Une instruction de poursuite est une instruction pour le cœur qui la reçoit de poursuivre son fonctionnement.

De plus, le premier cœur 10_1 est propre à poursuivre son fonctionnement après la réception d'une instruction de poursuite.

Les deux premiers programmes de calcul 16_1, 18_1 sont aptes à effectuer les mêmes opérations de traitement de données afin d'assurer une redondance. Autrement dit d'un point de vue fonctionnel, les deux premiers programmes de calcul 16_1, 18_1 sont des répliques exactes l'un de l'autre.

Les deux premiers programmes de calcul 16_1, 18_1 sont propres à effectuer les mêmes opérations indépendamment c'est-à-dire sans utiliser les données traitées par l'autre.

Les premiers programmes de calcul 16_1, 18_1 sont, par exemple, identiques et comportent les mêmes composants logiciels et/ou matériels.

Chaque premier programme de calcul 16_1, 18_1 comprend un module de comparaison 20, au moins un premier programme P_1 et un premier programme d'arrêt PA_1.

Le module de comparaison 20 est apte à comparer deux données et à déceler une anomalie si les données diffèrent.

Une exécution nominale dudit au moins un premier programme P_1 par chaque premier programme de calcul 16_1, 18_1 est une réalisation d'opérations qui génère une variation d'un premier ensemble de données.

Le premier programme d'arrêt PA_1 permet d'assurer un arrêt de l'organe sécurisé 2 en cas d'urgence, par exemple, lorsqu'une anomalie est détectée.

Le premier programme d'arrêt PA_1 est propre à transmettre des instructions d'arrêt d'urgence à l'organe sécurisé 2. Les instructions d'arrêt d'urgence permettent le passage de l'organe sécurisé 2 dans l'état d'arrêt sécuritaire.

De plus, le premier programme d'arrêt PA_1 est propre à arrêter la transmission de l'instruction de poursuite au deuxième cœur 12_1.

Le premier programme d'arrêt PA_1 comporte, avantageusement, un premier programme d'effacement d'au moins une partie du contenu des premiers programmes de calcul 16_1, 18_1 et d'au moins une partie du contenu de la première mémoire M_1.

La première horloge H_1 est propre à émettre un signal régulier. La première horloge permet, par exemple, le cadencement des programmes du premier cœur 10_1.

La première mémoire M_1 est partagée pour les deux premiers programmes de calcul 16_1, 18_1. En variante, le premier cœur 10_1 comporte une première mémoire M_1 distincte associée à chaque premier programme de calcul 16_1, 18_1.

La première mémoire M_1 est propre à mémoriser des premiers éléments statiques du premier cœur 10_1.

Le terme « éléments statiques » désigne les éléments supposés invariants dans le premier cœur 10_1 ou dans le deuxième cœur 10_2. Ces éléments statiques sont, par exemple, des instructions de registre permettant de réaliser des opérations de base, comme des additions, des multiplications ou autre.

Les premiers éléments statiques comprennent les instructions des programmes du premier cœur 10_1 et au moins un élément choisi dans le groupe constitué par les tables de constantes du premier cœur 10_1, les registres de configuration du premier cœur 10_1 et les circuits électroniques du premier cœur 10_1.

Dans une variante, les premiers éléments statiques comprennent à la fois, les instructions des programmes du premier cœur 10_1, les tables de constantes du premier cœur 10_1, les registres de configuration du premier cœur 10_1 et les circuits électroniques du premier cœur 10_1.

Le premier cœur 10_1 comporte dans sa première mémoire M_1 une première série d'instructions informatiques pour réaliser des opérations prédéterminées aboutissant à un premier résultat connu.

En outre, le premier cœur 10_1 est propre à mettre en œuvre la première série d'opérations prédéterminées, dans chaque premier programme de calcul 16_1 et 18_1. La première série d'opérations prédéterminées en étant effectuée par le premier cœur 10_1, aboutit à un premier élément calculé.

Les mêmes remarques concernant les éléments du premier cœur 10_1 précédemment décrits dans lesquelles les numéros de références se terminant par _1 sont remplacées par des numéros de références se terminant par _2 et les termes « premier » « première » et « premières » sont remplacés par les termes « deuxième » et « deuxièmes », s'appliquent aux éléments du deuxième cœur 10_2.

Chaque cœur 10_1, 10_2 est propre à assurer indépendamment de l'autre cœur 10_1 et 10_2, l'arrêt d'urgence de l'organe sécurisé 2.

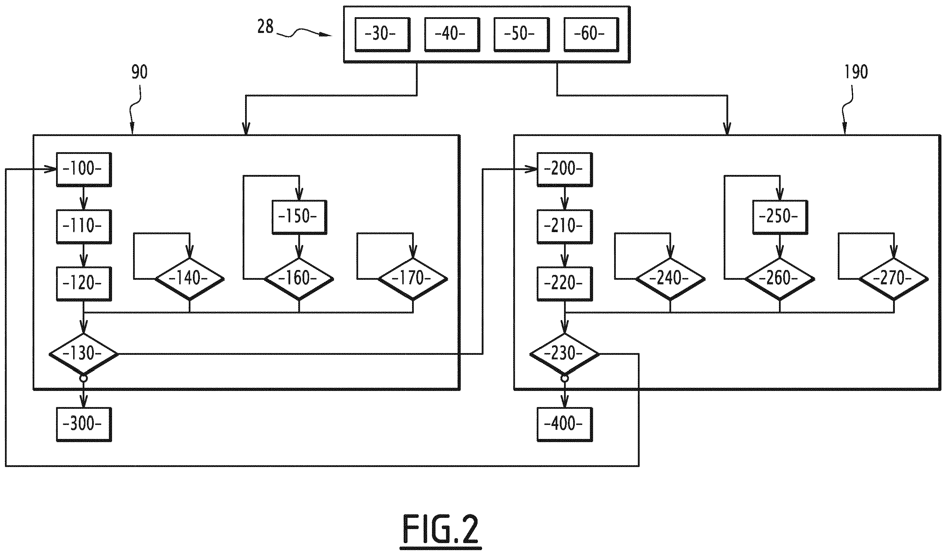

Le fonctionnement du système sécuritaire 4 est maintenant décrit en référence à la figure 2 qui est un ordinogramme d'un exemple de mise en œuvre d'un premier mode de réalisation du procédé d'arrêt d'urgence du système sécuritaire 4 selon l'invention.

Le procédé d'arrêt d'urgence comprend une étape d'initialisation 28, des premières étapes 90, des deuxièmes étapes 190, une troisième étape d'arrêt 300 et une quatrième étape d'arrêt 400.

L'étape d'initialisation 28 comprend les sous-étapes suivantes ; une mémorisation des premiers éléments statiques 30, une mémorisation du premier résultat connu 40, une mémorisation des deuxièmes éléments statiques 50 et une mémorisation du deuxième résultat connu 60.

Chaque sous-étape de mémorisation 30, 40, 50, 60 est avantageusement mise en œuvre une seule fois.

Lors de la mémorisation des premiers éléments statiques 30, les premiers éléments statiques sont, par exemple, mémorisés dans la première mémoire M_1. En variante, les premiers éléments statiques sont mémorisés dans la deuxième mémoire M_2.

Lors de la mémorisation du premier résultat connu 40, le premier résultat connu est, par exemple, mémorisé dans la première mémoire M_1. En variante, le premier résultat connu est mémorisé dans la deuxième mémoire M_2.

Lors de la mémorisation des deuxièmes éléments statiques 50, les deuxièmes éléments statiques sont, par exemple, mémorisés dans la deuxième mémoire M_2. En variante, les deuxièmes éléments statiques sont mémorisés dans la première mémoire M_1.

Lors de la mémorisation du deuxième résultat connu 60, le deuxième résultat connu est, par exemple, mémorisé dans la deuxième mémoire M_2. En variante, le deuxième résultat connu est mémorisé dans la première mémoire M_1.

Les premières étapes 90 comprennent une première étape de réalisation d'opérations 100, une première étape de transmission 110, une première étape de comparaison 120 et une première étape de déduction 130, une première étape de vérification des premiers éléments statiques 140, une première étape de calcul 150 aboutissant à un premier élément calculé, une étape de comparaison du premier résultat connu au premier élément calculé 160 et une première étape de contrôle du décalage des horloges 170.

La première étape de réalisation d'opérations 100 de traitement de données est mise en œuvre sur les deux premiers programmes de calcul 16_1, 18_1. Chacun des premiers programmes de calcul 16_1, 18_1 effectue donc la même série d'opérations.

Chaque réalisation d'opérations sur un premier programme de calcul 16_1, 18_1 aboutit à un premier résultat.

Par exemple, chaque premier programme de calcul 16_1, 18_1 exécute le premier programme P_1 et chaque variation du premier ensemble de données aboutit à un premier résultat.

Dans un premier exemple illustratif, si l'opération à effectuer est « 2 + 3 », le premier résultat est « 5 ». Chaque premier programme de calcul 16_1, 18_1 aboutit à la suite de l'opération « 2 + 3 », en fonctionnement nominal au même premier résultat « 5 ».

Dans le premier mode de réalisation du procédé, lors de la première étape de transmission 110, les deux premiers résultats obtenus sont transmis du premier cœur 10_1 au deuxième cœur 10_2.

Dans le premier exemple illustratif, les premiers résultats « 5 » et « 5 » de chaque premier programme de calcul 16_1, 16_2 sont transmis au deuxième cœur 10_2.

Dans le premier mode de réalisation du procédé, la première étape de comparaison 120 est mise en œuvre par le deuxième cœur 10_2. En particulier la première étape de comparaison est effectuée par les modules de comparaison 20 de chaque deuxième programme de calcul 16_2, 18_2.

Lors de la première étape de comparaison 120, une anomalie du premier cœur 10_1 est détectée si les premiers résultats fournis par les deux premiers programmes de calcul 16_1, 18_1 diffèrent.

Dans le premier exemple illustratif, si les premiers résultats sont, par exemple, « 5 » pour un premier programme de calcul 16_1, 18_1 et « 6 » pour l'autre premier programme de calcul 16_1, 18_1, une anomalie du premier cœur 10_1 est détectée. Une telle anomalie indique que les deux premiers programmes de calcul 16_1, 18_1 ne sont plus des répliques exactes l'un de l'autre car les deux premiers programmes de calcul 16_1, 18_1 n'obtiennent pas le même résultat.

Par exemple, chaque premier résultat contient une pluralité de données correspondant à divers résultats variables résultant des opérations du premier programme de calcul associé 16_1, 18_1. Par exemple, chaque premier résultat comporte une pluralité de données ordonnées selon un indice croissant, chaque donnée correspondant à un indice identique pour les deux premiers programmes de calcul 16_1, 18_1. La première étape de comparaison 120 comprend une comparaison pour chaque indice des données de chaque premier programme de calcul 16_1, 18_1 associées à l'indice, une anomalie du premier cœur 10_1 étant détectée si les valeurs diffèrent.

Dans un deuxième exemple illustratif, si les opérations à effectuer sont « 2 + 3 », puis « 1+5 ». Chaque premier programme de calcul 16_1, 18_1 aboutit à la suite des opérations en fonctionnement nominal au même premier résultat, une liste ordonnée « [5, 6] ». Si les premiers résultats sont, par exemple, « [5,6] » pour un premier programme de calcul 16_1, 18_1 et « [5,7] » pour l'autre premier programme de calcul 16_1, 18_1, une anomalie du premier cœur 10_1 sera détectée car les valeurs des données correspondant au deuxième indice, « 6 » et « 7 » diffèrent.

La première étape de déduction de l'état du système sécuritaire 130, est une étape d'orientation du procédé, soit vers la troisième étape d'arrêt 300 soit vers les deuxièmes étapes 190.

A l'issue de la première étape de déduction 130, si aucune anomalie du premier cœur 10_1 n'est détectée, l'ensemble des deuxièmes étapes 190 sont alors mises en œuvre.

La première étape de vérification des premiers éléments statiques 140 est mise en œuvre après l'étape de mémorisation des premiers éléments statiques 30.

Au cours de la première étape de vérification des premiers éléments statiques 140, une anomalie du premier cœur 10_1 est détectée si les premiers éléments statiques diffèrent des éléments statiques du premier cœur 10_1 mémorisés.

Une telle anomalie indique, par exemple, que le premier cœur 10_1 présente un défaut ayant modifié un premier élément statique, par exemple, un circuit électronique défectueux.

Avantageusement, la première étape de vérification des premiers éléments statiques 140 est itérée tant qu'aucune anomalie n'est détectée.

La première étape de calcul 150 est mise en œuvre par le premier cœur 10_1. La première étape de calcul 150 est effectuée après l'étape de mémorisation du premier résultat connu 40.

Lors de la première étape de calcul 150, le premier cœur 10_1 effectue la première série d'opérations prédéterminées aboutissant à un premier élément calculé.

Dans un troisième exemple illustratif, la série d'opération prédéterminée est «faire l'opération « 2+1 », puis multiplier le résultat de cette opération par 3 », les chiffres « 1 », « 2 », et « 3 » étant fixés et choisis dans l'objectif de contrôler le bon fonctionnement des opérations d'addition et de multiplication. Le résultat connu et mémorisé est « 9 ». Les opérations sont réalisées par le premier cœur 10_1 et aboutissent au nombre « 9 » en fonctionnement nominal.

L'étape de comparaison du premier résultat connu au premier élément calculé 160 est avantageusement mise en œuvre à chaque fois que la première étape de calcul 150 est effectuée.

Lors de l'étape de comparaison du premier résultat connu au premier élément calculé 160, une anomalie du premier cœur 10_1 est détectée si le premier élément calculé et le premier résultat connu diffèrent.

Dans le troisième exemple illustratif, si le premier élément calculé « 8 », une anomalie sera détectée après comparaison au résultat « 9 » enregistré. Cette anomalie pourrait, par exemple, résulter de défauts du premier cœur 10_1 empêchant la réalisation juste d'additions ou de multiplications.

Avantageusement, la première étape de calcul 150 et l'étape de comparaison du premier résultat connu au premier élément calculé 160, sont itérées tant qu'aucune anomalie n'est détectée.

La première étape de contrôle du décalage des horloges 170 est mise en œuvre par le premier cœur 10_1.

Lors de la première étape de contrôle du décalage des horloges 170, une anomalie du premier cœur 10_1 est détectée si le décalage de la première horloge H_1 par rapport à la deuxième horloge H_2 est supérieur ou égal à un seuil de tolérance prédéterminé.

Avantageusement, la première étape de contrôle du décalage des horloges 170 est itérée tant qu'aucune anomalie n'est détectée.

Les mêmes remarques concernant les premières étapes 90 précédemment décrites s'appliquent aux deuxièmes étapes 190. Les indices de références ont été augmentés de 100.

Les deuxièmes étapes 190 comprennent une deuxième étape de réalisation d'opérations 200, une deuxième étape de transmission 210, une deuxième étape de comparaison 220, une deuxième étape de déduction de l'état de système sécuritaire 230, une deuxième étape de vérification des deuxièmes éléments statiques 240, une deuxième étape de calcul 250 aboutissant à un deuxième élément calculé et une étape de comparaison du deuxième résultat connu au deuxième élément calculé 260 et une deuxième étape de contrôle du décalage des horloges 270.

La deuxième étape de réalisation d'opérations 200 de traitement de données est mise en œuvre sur les deux deuxièmes programmes de calcul 16_2, 18_2. Chacun des deuxièmes programmes de calcul 16_2, 18_2 effectue donc la même série d'opérations.

Chaque réalisation d'opérations sur un deuxième programme de calcul 16_2, 18_2 aboutit à un deuxième résultat.

Par exemple, chaque deuxième programme de calcul 16_1, 18_1 exécute le deuxième programme P_2 et chaque variation du premier ensemble de données aboutit à un deuxième résultat.

Dans le premier mode de réalisation du procédé, lors de la deuxième étape de transmission 210, les deux deuxièmes résultats obtenus sont transmis du deuxième cœur 10_2 au premier cœur 10_1.

Dans le premier mode de réalisation du procédé, la deuxième étape de comparaison 220 est mise en œuvre par le premier cœur 10_1.

Lors de la deuxième étape de comparaison 220, une anomalie du deuxième cœur 10_2 est détectée si les deuxièmes résultats, fournis par les deux deuxièmes programmes de calcul 16_2, 18_2, diffèrent.

Par exemple, chaque deuxième résultat contient une pluralité de données correspondant à divers résultats variables résultant des opérations du deuxième programme de calcul associé 16_2, 18_2. Chaque deuxième résultat comporte une pluralité de données ordonnées selon un indice croissant, chaque donnée correspondant à un indice identique pour les deux deuxièmes programmes de calcul 16_2, 18_2. La deuxième étape de comparaison 220 comprend une comparaison pour chaque indice des données de chaque deuxième programme de calcul 16_2, 18_2 associées à l'indice, une anomalie du deuxième cœur 10_2 étant détectée si les valeurs diffèrent.

La deuxième étape de déduction de l'état du système sécuritaire 230, est une étape d'orientation du procédé, soit vers la quatrième étape d'arrêt 400 soit vers les premières étapes 90.

A l'issue de la deuxième étape de déduction 230, si aucune anomalie du deuxième cœur 10_2 n'est détectée, les premières étapes 90 sont itérées. L'ensemble des premières étapes 90 sont à nouveau mises en œuvre, par exemple, à partir de la première étape de réalisation d'opérations 100 de traitement de données.

Le procédé est donc itéré tant qu'aucune anomalie du premier cœur 10_1 ou du deuxième cœur 10_2 n'a été détectée.

La deuxième étape de vérification des éléments statiques 240 est mise en œuvre après l'étape de mémorisation des deuxièmes éléments statiques 50.

Au cours de la deuxième étape de vérification des deuxièmes éléments statiques 240, une anomalie du deuxième cœur 10_2 est détectée si les deuxièmes éléments statiques diffèrent des éléments statiques du deuxième cœur 10_2 mémorisés.

Avantageusement, la deuxième étape de vérification des deuxièmes éléments statiques 240 est itérée tant qu'aucune anomalie n'est détectée.

La deuxième étape de calcul 250 est mise en œuvre par le deuxième cœur 10_2. La deuxième étape de calcul 250 est effectuée après l'étape de mémorisation du deuxième résultat connu 60.

Lors de la deuxième étape de calcul 250, le deuxième cœur 10_2 effectue la deuxième série d'opérations prédéterminées aboutissant à un deuxième élément calculé.

L'étape de comparaison du deuxième résultat connu au deuxième élément calculé 260 est avantageusement mise en œuvre à chaque fois que la deuxième étape de calcul 250 est effectuée.

Lors de l'étape de comparaison du deuxième résultat connu au deuxième élément calculé 260, une anomalie du deuxième cœur 10_2 est détectée si le deuxième élément calculé et le deuxième résultat connu diffèrent.

Avantageusement, la deuxième étape de calcul 250 et l'étape de comparaison du deuxième résultat connu au deuxième élément calculé 260 sont itérées tant qu'aucune anomalie n'est détectée.

La deuxième étape de contrôle du décalage des horloges 270 est mise en œuvre par le deuxième cœur 10_2.

Lors de la deuxième étape de contrôle du décalage des horloges 270, une anomalie du deuxième cœur 10_2 est détectée si le décalage de la deuxième horloge H_2 par rapport à la première horloge H_1 est supérieur ou égal à un seuil de tolérance prédéterminé.

Avantageusement, la deuxième étape de contrôle du décalage des horloges 270 est itérée tant qu'aucune anomalie n'est détectée.

De plus, une instruction de poursuite est transmise régulièrement au premier cœur 10_1 par le deuxième cœur 10_2 tant qu'aucune anomalie n'est détectée.

De plus, une instruction de poursuite est transmise régulièrement au deuxième cœur 10_2 par le premier cœur 10_2 tant qu'aucune anomalie n'est détectée.

Une anomalie du premier cœur 10_1 est détectable à l'issue de la première étape de déduction 130 de l'état du système sécuritaire 4. Lorsqu'une telle anomalie du premier cœur 10_1 est détectée, la troisième étape d'arrêt 300 est mise en œuvre par le deuxième programme d'arrêt du deuxième cœur 10_2.

Lors de la troisième étape d'arrêt 300, le deuxième programme d'arrêt PA_2 est exécuté. L'organe sécurisé 2 est mis dans l'état d'arrêt sécuritaire par le deuxième cœur 10_2.

La troisième étape d'arrêt 300 comporte une étape d'arrêt de la transmission de l'instruction de poursuite au premier cœur 10_1.

En outre, la troisième étape d'arrêt du système sécuritaire 300 comporte avantageusement une étape d'effacement de la mémoire du deuxième cœur 10_2 ou d'au moins une partie du contenu des deuxièmes programmes de calcul 16_2, 18_2 par le deuxième cœur 10_2. Un tel effacement permet de limiter les risques de redémarrage intempestif de l'ensemble sécuritaire 1 et notamment de l'organe sécurisé 2 après une mise en arrêt.

Si le premier cœur 10_1 détecte l'absence d'instruction de poursuite, la quatrième étape d'arrêt 400 sera alors mise en œuvre par le premier cœur 10_1, s'il est apte à l'exécuter.

Une anomalie du deuxième cœur 10_2 est détectable à l'issue de la deuxième étape de déduction 230 de l'état du système sécuritaire 4. Lorsqu'une telle anomalie du deuxième cœur 10_2 est détectée, la quatrième étape d'arrêt 400 est mise en œuvre par le premier programme d'arrêt du premier cœur 10_1.

Lors de la quatrième étape d'arrêt 400, le premier programme d'arrêt PA_1 est exécuté. L'organe sécurisé 2 est mis dans l'état d'arrêt sécuritaire par le premier cœur 10_1.

La quatrième étape d'arrêt 400 comporte une étape d'arrêt de la transmission de l'instruction de poursuite au deuxième cœur 10_2.

En outre, la quatrième étape d'arrêt 400 du système sécuritaire 4 comporte avantageusement une étape d'effacement de la mémoire du premier cœur 10_1 ou d'au moins une partie du contenu des premiers programmes de calcul 16_1, 18_1 par le premier cœur 10_1.

Si le deuxième cœur 10_2 détecte l'absence d'instruction de poursuite, la troisième étape d'arrêt 300 sera alors mise en œuvre par le deuxième cœur 10_2, s'il est apte à l'exécuter.

Ainsi, le premier mode de réalisation du procédé d'arrêt d'urgence du système sécuritaire 4 selon l'invention concerne un procédé où la première étape de comparaison 120 et la deuxième étape de comparaison 220 sont effectuées à distance, c'est-à-dire dans le cœur 10_1, 10_2 qui n'est pas le cœur 10_1, 10_2 dans lequel les résultats des unités de calcul 16_1, 18_1, 16_2, 18_2 à comparer ont été obtenus.

Un deuxième mode de réalisation du procédé d'arrêt d'urgence du système sécuritaire 4 selon l'invention va maintenant être décrit.

Le procédé d'arrêt d'urgence selon le deuxième mode de réalisation est similaire au procédé selon le premier mode de réalisation sauf en ce qui concerne les différences qui vont être énoncées ci-après.

Le procédé d'arrêt d'urgence du deuxième mode de réalisation diffère du procédé du premier mode de réalisation décrit en ce que la première étape de comparaison 120 et la deuxième étape de comparaison 220 sont effectuées localement, c'est-à-dire dans le cœur 10_1, 10_2 dans lequel les résultats des programmes de calcul 16_1, 18_1, 16_2 18_2 ont été obtenus.

Le procédé d'arrêt d'urgence du deuxième mode de réalisation diffère du procédé d'arrêt d'urgence du premier mode de réalisation en ce que la première étape de comparaison 120 est mise en œuvre par le premier cœur 10_1. La première étape de comparaison 120 est effectuée par le module de comparaison de chaque premier programme de calcul 16_1, 18_1.

Le procédé d'arrêt d'urgence d'arrêt d'urgence du deuxième mode de réalisation diffère également du procédé du premier mode de réalisation en ce que le procédé d'arrêt d'urgence comprend :
- une première étape de génération d'un premier message indiquant si une anomalie du premier cœur 10_1 a été détectée,
- une première étape de transmission du premier message.

L'étape de génération du premier message est, par exemple, mise en œuvre par le module de comparaison 20 de chaque premier programme de calcul 16_1, 18_1.

Lors de la première étape de transmission du premier message, le premier message est transmis du premier cœur 10_1 au deuxième cœur 10_2.

A la suite du la première étape de transmission du premier message, la troisième étape d'arrêt 300 est mise en œuvre par le deuxième cœur 10_2 si le premier message indique qu'une anomalie du premier cœur 10_1 a été détectée.

Le procédé d'arrêt d'urgence d'arrêt d'urgence du deuxième mode de réalisation diffère également du procédé du premier mode de réalisation en ce que la deuxième étape de comparaison 220 est mise en œuvre.

Le procédé du deuxième mode de réalisation diffère également du procédé d'arrêt d'urgence du premier mode de réalisation en ce que le procédé d'arrêt d'urgence comprend :
- une deuxième étape de génération d'un deuxième message indiquant si une anomalie du deuxième cœur 10_2 a été détectée,
- une deuxième étape de transmission du deuxième message.

Lors de la deuxième étape de transmission du deuxième message, le deuxième message est transmis du deuxième cœur 10_2 au premier cœur 10_1.

A la suite de la deuxième étape de transmission du deuxième message la quatrième étape d'arrêt 400 est mise en œuvre par le premier cœur 10_1, si le deuxième message indique qu'une anomalie du deuxième cœur 10_2 a été détectée.

Ce procédé d'arrêt d'urgence selon le deuxième mode de réalisation permet de limiter le nombre de données à transmettre entre le premier cœur 10_1 et le deuxième cœur 10_2 puisque la détection de différences est effectuée localement.

Le procédé d'arrêt d'urgence qui vient d'être décrit dans deux modes de réalisation permet un arrêt sécuritaire de l'organe sécurisé 2. En effet, lorsqu'une anomalie d'un cœur 10_1, 10_2 est détectée, l'arrêt est effectué par l'autre cœur. L'arrêt est donc contrôlé par le cœur qui n'est pas le cœur pour lequel une anomalie a été détectée. Ceci permet d'avoir un arrêt sécurisé puisque le risque que le cœur effectuant l'arrêt soit également défectueux est faible.

En variante, l'ensemble sécuritaire 1 comprend plusieurs organes sécurisés 2.

Avantageusement, le procédé comporte une étape de récupération mise en œuvre par le premier cœur 10_1 avant la première étape de déduction 130, si, à la suite de l'étape de comparaison 120, une anomalie est détectée.

Durant l'étape de récupération, le premier cœur 10_1 est éteint et rallumé de sorte que les deux premiers programmes 16_1 et 18_1 de calcul se réinitialisent. Puis les premières étapes de réalisation d'opérations 100 et de comparaison 120 sont réitérées une fois. La première étape de déduction 130 est ensuite mise en œuvre.

En outre, la troisième étape d'arrêt 300 comprend une étape d'attente pendant laquelle les étapes de réalisation d'opérations 100 et de comparaison 120 sont réitérées.

Avantageusement, le procédé comporte une deuxième étape de récupération mise en œuvre par le deuxième cœur 10_2 avant la deuxième étape de déduction 230, si, à la suite de la deuxième étape de comparaison 220, une anomalie est détectée.

Durant l'étape de récupération, le deuxième cœur 10_2 est éteint et rallumé de sorte que les deux deuxièmes programmes de calcul 16_2 et 18_2 se réinitialisent. Puis les deuxièmes étapes de réalisation d'opérations 200 et de comparaison 220 sont réitérées une fois. La deuxième étape de déduction 230 est ensuite mise en œuvre.

En outre, la quatrième étape d'arrêt 400 comprend une étape d'attente pendant laquelle les étapes de réalisation d'opérations 200 et de comparaison 220 sont réitérées.

## Revendications

1. Procédé d'arrêt d'urgence d'un organe sécurisé (2) d'un ensemble sécuritaire (1), l'ensemble sécuritaire (1) comprenant l'organe sécurisé (2) et un système sécuritaire (4), le système sécuritaire (4) comprenant :
- un premier cœur (10_1) comprenant :
∘ deux premiers programmes de calcul (16_1, 18_1) aptes à effectuer les mêmes opérations, et
∘ un premier programme d'arrêt (PA_1) propre à mettre en œuvre un arrêt d'urgence, et
- un deuxième cœur (10_2) comprenant :
∘ deux deuxièmes programmes de calcul (16_2, 18_2) aptes à effectuer les mêmes opérations, et
∘ un deuxième programme d'arrêt (PA_2) propre à mettre en œuvre un arrêt d'urgence,
le procédé comprenant la mise en œuvre de premières étapes (90) comprenant :
- une première étape de réalisation d'opérations (100) sur les deux premiers programmes de calcul (16_1, 18_1), chaque réalisation d'opérations sur un premier programme de calcul (16_1, 18_1) aboutissant à un premier résultat,
- une première étape de comparaison (120) des deux premiers résultats, une anomalie du premier cœur (10_1) étant détectée si les deux premiers résultats diffèrent,
- une première étape de déduction (130) de l'état du système sécuritaire (4), à l'issue de laquelle :
∘ si une anomalie du premier cœur (10_1) est détectée, une troisième étape d'arrêt (300) est mise en œuvre par le deuxième programme d'arrêt (PA_2) du deuxième cœur (10_2),
∘ si aucune anomalie du premier cœur (10_1) n'est détectée, des deuxièmes étapes (190) sont mises en œuvre,
les deuxièmes étapes (190) comprenant:
- une deuxième étape de réalisation d'opérations (200) sur les deux deuxièmes programmes de calcul (16_2, 18_2), chaque réalisation d'opérations sur un deuxième programme de calcul (16_2, 18_2) aboutissant à un deuxième résultat,
- une deuxième étape de comparaison (220) des deux deuxièmes résultats, une anomalie du deuxième cœur (10_2) étant détectée si les deux deuxièmes résultats diffèrent,
- une deuxième étape de déduction (230) de l'état du système sécuritaire (4), à l'issue de laquelle :
∘ si une anomalie du deuxième cœur (10_2) est détectée, une quatrième étape d'arrêt (400) est mise en œuvre par le premier programme d'arrêt (PA_1) du premier cœur (10_1),
∘ si aucune anomalie du deuxième cœur (10_2) n'est détectée, les premières étapes (90) sont itérées,
les premières étapes (90) et les deuxièmes étapes (190) étant itérées tant qu'aucune anomalie du premier cœur (10_1) ou du deuxième cœur (10_2) n'est détectée.

2. Procédé d'arrêt selon la revendication 1, dans lequel le premier cœur (10_1) comprend :
- des programmes ayant des instructions,
- des tables de constantes,
- des registres de configuration,
- des circuits électroniques, et
- des premiers éléments statiques (30), les premiers éléments statiques comprenant les instructions des programmes du premier cœur (10_1) et au moins un élément choisi dans le groupe constitué par :
∘ les tables de constantes du premier cœur (10_1),
∘ les registres de configuration du premier cœur (10_1) et
∘ les circuits électroniques du premier cœur (10_1),
et dans lequel le deuxième cœur (10_2) comprend :
- des programmes ayant des instructions,
- des tables de constantes,
- des registres de configuration,
- des circuits électroniques et
- des deuxièmes éléments statiques (50), les deuxièmes éléments statiques comprenant les instructions des programmes du deuxième cœur (10_2) et au moins un élément choisi dans le groupe constitué par :
∘ les tables de constantes du deuxième cœur (10_2),
∘ les registres de configuration du deuxième cœur (10_2) et
∘ les circuits électroniques du deuxième cœur (10_2),
et dans lequel le procédé comprend en outre :
- une étape de mémorisation des premiers éléments statiques (30),
- une étape de mémorisation des deuxièmes éléments statiques (50),
- une première étape de vérification des premiers éléments statiques (140), une anomalie du premier cœur (10_1) étant détectée si les premiers éléments statiques diffèrent des premiers éléments statiques du premier cœur (10_1) mémorisés, et
- une deuxième étape de vérification des deuxièmes éléments statiques (240), une anomalie du deuxième cœur (10_2) étant détectée si les deuxièmes éléments statiques du deuxième cœur (10_2) diffèrent des deuxièmes éléments statiques du deuxième cœur (10_2) mémorisés.

3. Procédé d'arrêt selon la revendication 1 ou 2, dans lequel le premier cœur (10_1) comporte une première mémoire (M_1) et est propre à mettre en œuvre une première série d'opérations prédéterminées aboutissant à un premier résultat connu,
et dans lequel le deuxième cœur (10_2) comporte une deuxième mémoire (M_2) et est propre à mettre en œuvre une deuxième série d'opérations prédéterminées aboutissant à un deuxième résultat connu, et
le procédé comprenant :
- une étape de mémorisation du premier résultat connu (40),
- une étape de mémorisation du deuxième résultat connu (60),
- une première étape de calcul (150), durant laquelle le premier cœur (10_1) effectue la première série d'opérations prédéterminées aboutissant à un premier élément calculé,
- une étape de comparaison du premier résultat connu au premier élément calculé (160), une anomalie du premier cœur (10_1) étant détectée si le premier élément calculé et le premier résultat connu diffèrent,
- une deuxième étape de calcul (250), durant laquelle le deuxième cœur (10_2) effectue la deuxième série d'opérations prédéterminées aboutissant à un deuxième élément calculé, et
- une étape de comparaison du deuxième résultat connu au deuxième élément calculé (260), une anomalie du deuxième cœur (10_2) étant détectée si le deuxième élément calculé et le deuxième résultat connu diffèrent.

4. Procédé d'arrêt selon l'une quelconque des revendications 1 à 3, dans lequel le premier cœur (10_1) comprend une première horloge (H_1), et le deuxième cœur (10_2) comprend une deuxième horloge (H_2), le procédé comportant :
- une première étape de contrôle du décalage des horloges (170), mise en œuvre par le deuxième cœur (10_2), une anomalie du premier cœur (10_1) étant détectée si le décalage de la première horloge (H_1), par rapport à la deuxième horloge (H_2), est supérieur ou égal à un seuil de tolérance prédéterminé,
- une deuxième étape de contrôle du décalage des horloges (270) mise en œuvre par le premier cœur (10_1), une anomalie du deuxième cœur (10_2) étant détectée si le décalage de la deuxième horloge (H_2), par rapport à la première horloge (H_1), est supérieur ou égal à un seuil de tolérance prédéterminé.

5. Procédé d'arrêt selon l'une quelconque des revendications 1 à 4, dans lequel chaque premier programme de calcul (16_1, 18_1) comprend un premier programme (P_1), une exécution nominale dudit au moins un premier programme (P_1) générant des variations des données d'un premier ensemble de données,
et chaque deuxième programme de calcul (16_2, 18_2) comprend un deuxième programme (P_2), une exécution nominale dudit au moins un deuxième programme (P_2) générant des variations des données d'un deuxième ensemble de données,
et dans lequel les première étapes (90) sont appliquées pour toutes les variations du premier ensemble de données que l'exécution nominale dudit au moins un premier programme (P_1) est propre à générer, chaque variation étant une réalisation d'opération, et les deuxièmes étapes (190) sont appliquées pour toutes les variations du deuxième ensemble de données que l'exécution nominale dudit au moins un deuxième programme (P_2) est propre à générer, chaque variation étant une réalisation d'opération.

6. Procédé d'arrêt selon l'une quelconque des revendications 1 à 5, dans lequel la première étape de comparaison (120) des deux premiers résultats est mise en œuvre par le deuxième cœur (10_2) et la deuxième étape de comparaison (220) des deux deuxièmes résultats est mise en œuvre par le premier cœur (10_1).

7. Procédé d'arrêt selon l'une quelconque des revendications 1 à 6, dans lequel le premier cœur (10_1) comprend, en outre, une première mémoire (M_1) et le deuxième cœur (10_2) comprend, en outre, une deuxième mémoire (M_2) et dans lequel :
- le premier programme d'arrêt (PA_1) comporte un premier programme d'effacement d'au moins une partie du contenu de la première mémoire (M_1),
- le deuxième programme d'arrêt (PA_2) comporte un deuxième programme d'effacement de la deuxième mémoire (M_2),
- la troisième étape d'arrêt (300) comporte une étape d'effacement d'au moins une partie du contenu de la deuxième mémoire (M_2) du deuxième cœur (10_2) par le deuxième cœur (10_2), et
- la quatrième étape d'arrêt (400) comporte une étape d'effacement d'au moins une partie du contenu de la première mémoire (M_1) du premier cœur (10_1) par le premier cœur (10_1).

8. Procédé d'arrêt selon l'une quelconque des revendications 1 à 7, dans lequel la troisième étape d'arrêt (300) comporte une étape d'arrêt de transmission d'une instruction de poursuite au premier cœur (10_1) et la quatrième étape d'arrêt (400) comporte une étape d'arrêt de transmission d'une instruction de poursuite au deuxième cœur (10_2).

9. Procédé d'arrêt selon l'une quelconque des revendications 1 à 8, dans lequel chaque premier résultat comporte une pluralité de données ordonnées selon un indice croissant, chaque donnée correspondant à un indice identique pour les deux premiers programmes de calcul (16_1, 18_1), la première étape de comparaison (120) comprenant une comparaison pour chaque indice des données de chaque premier programme de calcul (16_1, 18_1) associées à l'indice particulier, une anomalie du premier cœur (10_1) étant détectée si les valeurs diffèrent, et dans lequel chaque deuxième résultat comporte une pluralité de données ordonnées selon un indice croissant, chaque donnée correspondant à un indice identique pour les deux deuxièmes programmes de calcul (16_2, 18_2), la deuxième étape de comparaison (220) comprenant une comparaison pour chaque indice des données de chaque deuxième programme de calcul (16_2, 18_2) associées à l'indice particulier, une anomalie du deuxième cœur (10_2) étant détectée si les valeurs diffèrent.

10. Système sécuritaire (4), le système sécuritaire (4) comprenant :
- un premier cœur (10_1) comprenant :
∘ deux premiers programmes de calcul (16_1, 18_1) aptes à effectuer les mêmes opérations, et
∘ un premier programme d'arrêt (PA_1) propre à mettre en œuvre un arrêt d'urgence, et
- un deuxième cœur (10_2) comprenant :
∘ deux deuxièmes programmes de calcul (16_2, 18_2) aptes à effectuer les mêmes opérations, et
∘ un deuxième programme d'arrêt (PA_2) propre à mettre en œuvre un arrêt d'urgence,
le système sécuritaire (4) étant propre à mettre en œuvre le procédé d'arrêt d'urgence suivant l'une quelconque des revendications 1 à 9.

## Patentansprüche

1. Verfahren zur Notabschaltung eines gesicherten Elementes (2) einer Sicherheitsbaugruppe (1), wobei die Sicherheitsbaugruppe (1) das gesicherte Element (2) und ein Sicherheitssystem (4) umfasst, wobei das Sicherheitssystem (4) umfasst:
- einen ersten Kern (10_1), umfassend:
∘ zwei erste Rechenprogramme (16_1, 18_1), die geeignet sind, die gleichen Operationen durchzuführen, und
∘ ein erstes Abschaltprogramm (PA_1), das geeignet ist, eine Notabschaltung durchzuführen, und
- einen zweiten Kern (10_2), umfassend
∘ zwei zweite Rechenprogramme (16_2, 18_2), die geeignet sind, die gleichen Operationen durchzuführen, und
∘ ein zweites Abschaltprogramm (PA_2), das geeignet ist, eine Notabschaltung durchzuführen, wobei
das Verfahren die Durchführung von ersten Schritten (90) umfasst, die enthalten:
- einen ersten Schritt der Durchführung von Operationen (100) mit den zwei ersten Rechenprogrammen (16_1, 18_1), wobei jede Durchführung von Operationen mit einem ersten Rechenprogrammen (16_1, 18_1) zu einem ersten Ergebnis führt,
- einen ersten Schritt des Vergleichs (120) der zwei ersten Ergebnisse, wobei eine Anomalie des ersten Kerns (10_1) detektiert wird, wenn die zwei ersten Ergebnisse sich unterscheiden,
- einen ersten Schritt des Rückschließens (130) des Zustandes des Sicherheitssystems (4), an dessen Ende:
∘ ein dritter Abschaltschritt (300) durch das zweite Abschaltprogramm (PA_2) des zweiten Kerns (10_2) durchgeführt wird, wenn eine Anomalie des ersten Kerns (10_1) detektiert wird,
∘ zweite Schritte (190) durchgeführt werden, wenn keine Anomalie des ersten Kerns (10_1) detektiert wird,
wobei die zweiten Schritte (190) umfassen:
- einen zweiten Schritt der Durchführung von Operationen (200) mit den zwei zweiten Rechenprogrammen (16_2, 18_2), wobei jede Durchführung von Operationen mit einem zweiten Rechenprogramm (16_1, 18_1) zu einem zweiten Ergebnis führt,
- einen zweiten Schritt des Vergleichs (220) der zwei zweiten Ergebnisse, wobei eine Anomalie des zweiten Kerns (10_2) detektiert wird, wenn die zwei zweiten Ergebnisse sich unterscheiden,
- einen zweiten Schritt des Rückschließens (230) des Zustandes des Sicherheitssystems (4), an dessen Ende:
∘ ein vierter Abschaltschritt (400) durch das erste Abschaltprogramm (PA_1) des ersten Kerns (10_1) durchgeführt wird, wenn eine Anomalie des zweiten Kerns (10_2) detektiert wird,
∘ die ersten Schritte (90) wiederholt werden, wenn keine Anomalie des zweiten Kerns (10_2) detektiert wird,
wobei die ersten Schritte (90) und die zweiten Schritte (190) so lange wiederholt werden bis keine Anomalie des ersten Kerns (10_1) oder des zweiten Kerns (10_2) detektiert wird.

2. Abschaltverfahren nach Anspruch 1, bei dem der erste Kern (10_1) umfasst:
- Programme, die Befehle beinhalten,
- Tabellen von Konstanten,
- Konfigurationsregister,
- elektronische Schaltkreise,
- erste statische Elemente (30),
wobei die ersten statischen Elemente umfassen
die Programmbefehle des ersten Kerns (10_1) und mindestens ein Element, ausgewählt aus der Gruppe, die besteht aus:
∘ den Tabellen von Konstanten des ersten Kerns (10_1),
∘ den Konfigurationsregistern des ersten Kerns (10_1) und
∘ den elektronischen Schaltkreisen des ersten Kerns (10_1),
und bei dem der zweite Kern (10_2) umfasst:
- Programme, die Befehle beinhalten,
- Tabellen von Konstanten,
- Konfigurationsregister,
- elektronische Schaltkreise,
- zweite statische Elemente (50),
wobei die zweiten statischen Elemente umfassen
die Programmbefehle des zweiten Kerns (10_2) und mindestens ein Element, ausgewählt aus der Gruppe, die besteht aus:
∘ den Tabellen von Konstanten des zweiten Kerns (10_2),
∘ den Konfigurationsregistern des zweiten Kerns (10_2) und
∘ den elektronischen Schaltkreisen des zweiten Kerns (10_2),
und wobei das Verfahren außerdem umfasst:
- einen Schritt des Speicherns der ersten statischen Elemente (30),
- einen Schritt des Speicherns der zweiten statischen Elemente (50),
- einen ersten Schritt des Verifizierens der ersten statischen Elemente (140), wobei eine Anomalie des ersten Kerns (10_1) detektiert wird, wenn die ersten statischen Elemente sich von den ersten statischen Elementen des gespeicherten ersten Kerns (10_1) unterscheiden, und
- einen zweiten Schritt des Verifizierens der zweiten statischen Elemente (240), wobei eine Anomalie des zweiten Kerns (10_2) detektiert wird, wenn die zweiten statischen Elemente sich von den zweiten statischen Elementen des gespeicherten zweiten Kerns (10_2) unterscheiden.

3. Abschaltverfahren nach Anspruch 1 oder 2, bei dem der erste Kern (10_1) einen ersten Speicher (M_1) aufweist und geeignet ist, eine erste Reihe von vorbestimmten Operationen durchzuführen, die zu einem ersten bekannten Ergebnis führen, und
bei dem der zweite Kern (10_2) einen zweiten Speicher (M_2) aufweist und geeignet ist, eine zweite Reihe von vorbestimmten Operationen durchzuführen, die zu einem zweiten bekannten Ergebnis führen, und wobei das Verfahren umfasst:
- einen Schritt des Speicherns des ersten bekannten Ergebnisses (40),
- einen Schritt des Speicherns des zweiten bekannten Ergebnisses (60),
- einen ersten Berechnungsschritt (150), während dessen der erste Kern (10_1) die erste Reihe von vorbestimmten Operationen durchführt, der zu einem ersten berechneten Element führt,
- einen Schritt des Vergleichens des ersten bekannten Ergebnisses mit dem ersten berechneten Element (160), wobei eine Anomalie des ersten Kerns (10_1) detektiert wird, wenn das erste berechnete Element und das erste bekannte Ergebnis sich voneinander unterscheiden,
- einen zweiten Berechnungsschritt (250), während dessen der zweite Kern (10_2) die zweite Reihe von vorbestimmten Operationen durchführt, der zu einem zweiten berechneten Element führt,
- einen Schritt des Vergleichens des zweiten bekannten Ergebnisses mit dem zweiten berechneten Element (260), wobei eine Anomalie des zweiten Kerns (10_2) detektiert wird, wenn das zweite berechnete Element und das zweite bekannte Ergebnis sich voneinander unterscheiden.

4. Abschaltverfahren nach einem beliebigen der Ansprüche 1 bis 3, bei dem der erste Kern (10_1) eine erste Uhr (H_1) und der zweite Kern (10_2) eine zweite Uhr (H_2) umfasst, wobei das Verfahren aufweist:
- einen ersten Schritt des Steuerns des Versatzes der Uhren (170), der von dem zweiten Kern (10_2) durchgeführt wird, wobei eine Anomalie des ersten Kerns (10_1) detektiert wird, wenn der Versatz der ersten Uhr (H_1) in Bezug auf die zweite Uhr (H_2) größer oder gleich einer vorbestimmten Toleranzschwelle ist,
- einen zweiten Schritt des Steuerns des Versatzes der Uhren (270), der von dem ersten Kern (10_1) durchgeführt wird, wobei eine Anomalie des zweiten Kerns (10_1) detektiert wird, wenn der Versatz der zweiten Uhr (H_2) in Bezug auf die erste Uhr (H_1) größer oder gleich einer vorbestimmten Toleranzschwelle ist.

5. Abschaltverfahren nach einem beliebigen der Ansprüche 1 bis 4, bei dem jedes erste Berechnungsprogramm (16_1, 18_1) ein erstes Programm (P_1) umfasst, wobei eine nominale Ausführung des mindestens einen ersten Programms (P_1) Änderungen der Daten eines ersten Datensatzes erzeugt, und
jedes zweite Berechnungsprogramm (16_2, 18_2) ein zweites Programm (P_2) umfasst, wobei eine nominale Ausführung des mindestens einen zweiten Programms (P_2) Änderungen der Daten eines zweiten Datensatzes erzeugt, und
bei dem die ersten Schritte (90) für alle Änderungen des ersten Datensatzes angewendet werden, die die nominale Ausführung des mindestens einen ersten Programms (P_1) geeignet ist, zu erzeugen, wobei jede Änderung eine Durchführung der Operation ist, und die zweiten Schritte (190) für alle Änderungen des zweiten Datensatzes angewendet werden, die die nominale Ausführung des mindestens einen zweiten Programms (P_2) geeignet ist, zu erzeugen, wobei jede Änderung eine Durchführung der Operation ist.

6. Abschaltverfahren nach einem beliebigen der Ansprüche 1 bis 5, bei dem der erste Schritt des Vergleichs (120) der zwei ersten Ergebnisse von dem zweiten Kern (10_2) durchgeführt wird und der zweite Schritt des Vergleichs (220) der zwei zweiten Ergebnisse von dem ersten Kern (10_1) durchgeführt wird.

7. Abschaltverfahren nach einem beliebigen der Ansprüche 1 bis 6, bei dem der erste Kern (10_1) außerdem einen ersten Speicher (M_1) umfasst und der zweite Kern (10_2) außerdem einen zweiten Speicher (M_2) umfasst und bei dem:
- das erste Abschaltprogramm (PA_1) ein erstes Programm zum Löschen von mindestens einem Teil des Inhalts des ersten Speichers (M_1) aufweist,
- das zweite Abschaltprogramm (PA_2) ein zweites Programm zum Löschen von mindestens einem Teil des Inhalts des zweiten Speichers (M_2) aufweist,
- der dritte Abschaltschritt (300) einen Schritt des Löschens von mindestens einem Teil des Inhalts des zweiten Speichers (M_2) des zweiten Kerns (10_2) durch den zweiten Kern (10_2) aufweist, und
- der vierte Abschaltschritt (400) einen Schritt des Löschens von mindestens einem Teil des Inhalts des ersten Speichers (M_1) des ersten Kerns (10_1) durch den zweiten Kern (10_1) aufweist.

8. Abschaltverfahren nach einem beliebigen der Ansprüche 1 bis 7, bei dem der dritte Abschaltschritt (300) einen Schritt des Abschaltens der Übertragung eines Fortsetzungsbefehls an den ersten Kern (10_1) aufweist und der vierte Abschaltschritt (400) einen Schritt des Abschaltens der Übertragung eines Fortsetzungsbefehls an den zweiten Kern (10_2) aufweist.

9. Abschaltverfahren nach einem beliebigen der Ansprüche 1 bis 8, bei dem jedes erste Ergebnis eine Mehrzahl von Daten, geordnet nach einem aufsteigenden Index, aufweist, wobei jedes Datenelement einem identischen Index für die zwei ersten Rechenprogramme (16_1, 18_1) entspricht, der erste Vergleichsschritt (120) einen Vergleich für jeden Index der Daten jedes ersten Rechenprogramms (16_1, 18_1) umfasst, die dem bestimmten Index zugeordnet sind, und eine Anomalie des ersten Kerns (10_1) detektiert wird, wenn die Werte unterschiedlich sind, und bei dem jedes zweite Ergebnis eine Mehrzahl von Daten, geordnet nach einem aufsteigenden Index, aufweist, wobei jedes Datenelement einem identischen Index für die zwei zweiten Rechenprogramme (16_2, 18_2) entspricht, der zweite Vergleichsschritt (220) einen Vergleich für jeden Index der Daten jedes zweiten Rechenprogramms (16_2, 18_2) umfasst, die dem bestimmten Index zugeordnet sind, und eine Anomalie des zweiten Kerns (10_2) detektiert wird, wenn die Werte unterschiedlich sind.

10. Sicherheitssystem (4), wobei das Sicherheitssystem (4) umfasst:
- einen ersten Kern (10_1), umfassend:
∘ zwei erste Rechenprogramme (16_1, 18_1), die geeignet sind, die gleichen Operationen durchzuführen, und
∘ ein erstes Abschaltprogramm (PA_1), das geeignet ist, eine Notabschaltung durchzuführen, und
- einen zweiten Kern (10_2), umfassend
∘ zwei zweite Rechenprogramme (16_2, 18_2), die geeignet sind, die gleichen Operationen durchzuführen, und
∘ ein zweites Abschaltprogramm (PA_2), das geeignet ist, eine Notabschaltung durchzuführen, wobei das Sicherheitssystem (4) geeignet ist, das Verfahren zur Notabschaltung nach einem beliebigen der Ansprüche 1 bis 9 durchzuführen.

## Claims

1. Emergency stop method for a security member (2) of a safety assembly (1), the safety assembly (1) comprising the security member (2) and a safety system (4), the safety system (4) comprising:
- a first core (10_1) comprising:
∘ two first computation programs (16_1, 18_1) capable of performing the same operations, and
∘ a first stop program (PA_1) capable of implementing an emergency stop, and
- a second core (10_2) comprising:
∘ two second computation programs (16_2, 18_2) capable of performing the same operations, and
∘ a second stop program (PA_2) capable of implementing an emergency stop,
the method comprising carrying out first steps (90) comprising:
- a first step of performing operations (100) on the two first computation programs (16_1, 18_1), each performance of operations on a first computation program (16_1, 18_1) yielding a first result,
- a first step of comparing (120) the two first results, an anomaly of the first core (10_1) being detected if the two first results differ,
- a first step of deriving (130) the state of the safety system (4), at the end of which:
∘ if an anomaly of the first core (10_1) is detected, a third stop step (300) is carried out by the second stop program (PA_2) of the second core (10_2),
∘ if no anomaly of the first core (10_1) is detected, second steps (190) are carried out,
the second steps (190) comprising:
- a second step of performing operations (200) on the two second computation programs (16_2, 18_2), each performance of operations on a second computation program (16_2, 18_2) yielding a second result,
- a second step of comparing (220) the two second results, an anomaly of the second core (10_2) being detected if the two second results differ,
- a second step of deriving (230) the state of the safety system (4), at the end of which:
∘ if an anomaly of the second core (10_2) is detected, a fourth stop step (400) is carried out by the first stop program (PA_1) of the first core (10_1),
∘ if no anomaly of the second core (10_2) is detected, the first steps (90) are iterated,
the first steps (90) and the second steps (190) being iterated as long as no anomaly of the first core (10_1) or of the second core (10_2) is detected.

2. Stop method according to claim 1, wherein the first core (10_1) comprises:
- programs having instructions,
- tables of constants,
- configuration registers,
- electronic circuits, and
- first static elements (30),
the first static elements comprising
the instructions of the programs of the first core (10_1) and at least one element chosen from the group consisting of:
∘ the tables of constants of the first core (10_1),
∘ the configuration registers of the first core (10_1), and
∘ the electronic circuits of the first core (10_1),
and wherein the second core (10_2) comprises:
- programs having instructions,
- tables of constants,
- configuration registers,
- electronic circuits, and
- second static elements (50),
the second static elements comprising
the instructions of the programs of the second core (10_2) and at least one element chosen from the group consisting of:
∘ the tables of constants of the second core (10_2),
∘ the configuration registers of the second core (10_2), and
∘ the electronic circuits of the second core (10_2),
and wherein the method further comprises:
- a step of storing the first static elements (30),
- a step of storing the second static elements (50),
- a first step of verifying the first static elements (140), an anomaly of the first core (10_1) being detected if the first static elements differ from the stored first static elements of the first core (10_1), and
- a second step of verifying the second static elements (240), an anomaly of the second core (10_2) being detected if the second static elements of the second core (10_2) differ from the stored second static elements of the second core (10_2).

3. Stop method according to claim 1 or 2, wherein the first core (10_1) comprises a first memory (M_1) and is capable of carrying out a first series of predetermined operations yielding a first known result,
and wherein the second core (10_2) comprises a second memory (M_2) and is capable of carrying out a second series of predetermined operations yielding a second known result, and
the method comprising:
- a step of storing the first known result (40),
- a step of storing the second known result (60),
- a first computation step (150), during which the first core (10_1) performs the first series of predetermined operations yielding a first computed element,
- a step of comparing the first known result with the first computed element (160), an anomaly of the first core (10_1) being detected if the first computed element and the first known result differ,
- a second computation step (250), during which the second core (10_2) performs the second series of predetermined operations yielding a second computed element, and
- a step of comparing the second known result with the second computed element (260), an anomaly of the second core (10_2) being detected if the second computed element and the second known result differ.

4. Stop method according to any one of claims 1 to 3, wherein the first core (10_1) comprises a first clock (H_1) and the second core (10_2) comprises a second clock (H_2), the method comprising:
- a first step of checking the offset of the clocks (170) carried out by the second core (10_2), an anomaly of the first core (10_1) being detected if the offset of the first clock (H_1) relative to the second clock (H_2) is greater than or equal to a predetermined tolerance threshold,
- a second step of checking the offset of the clocks (270) carried out by the first core (10_1), an anomaly of the second core (10_2) being detected if the offset of the second clock (H_2) relative to the first clock (H_1) is greater than or equal to a predetermined tolerance threshold.

5. Stop method according to any one of claims 1 to 4, wherein each first computation program (16_1, 18_1) comprises a first program (P_1), a nominal execution of said at least one first program (P_1) generating variations of the data of a first set of data,
and each second computation program (16_2, 18_2) comprises a second program (P_2), a nominal execution of said at least one second program (P_2) generating variations of the data of a second set of data,
and wherein the first steps (90) are applied for all the variations of the first set of data that the nominal execution of said at least one first program (P_1) is capable of generating, each variation being an operation performance, and the second steps (190) are applied for all the variations of the second set of data that the nominal execution of said at least one second program (P_2) is capable of generating, each variation being an operation performance.

6. Stop method according to any one of claims 1 to 5, wherein the first step of comparing (120) the two first results is carried out by the second core (10_2) and the second step of comparing (220) the two second results is carried out by the first core (10_1).

7. Stop method according to any one of claims 1 to 6, wherein the first core (10_1) further comprises a first memory (M_1) and the second core (10_2) further comprises a second memory (M_2) and wherein:
- the first stop program (PA_1) comprises a first program for erasing at least part of the contents of the first memory (M_1),
- the second stop program (PA_2) comprises a second program for erasing the second memory (M_2),
- the third stop step (300) comprises a step of erasing at least part of the contents of the second memory (M_2) of the second core (10_2) by the second core (10_2), and
- the fourth stop step (400) comprises a step of erasing at least part of the contents of the first memory (M_1) of the first core (10_1) by the first core (10_1).

8. Stop method according to any one of claims 1 to 7, wherein the third stop step (300) comprises a step of stopping transmission of a continuation instruction to the first core (10_1), and the fourth stop step (400) comprises a step of stopping transmission of a continuation instruction to the second core (10_2).

9. Stop method according to any one of claims 1 to 8, wherein each first result comprises a plurality of data organised according to an increasing index, each datum corresponding to an index that is identical for the two first computation programs (16_1, 18_1), the first step of comparing (120) comprising comparing, for each index, the data of each first computation program (16_1, 18_1) that are associated with the particular index, an anomaly of the first core (10_1) being detected if the values differ, and wherein each second result comprises a plurality of data organised according to an increasing index, each datum corresponding to an index that is identical for the two second computation programs (16_2, 18_2), the second step of comparing (220) comprising comparing, for each index, the data of each second computation program (16_2, 18_2) that are associated with the particular index, an anomaly of the second core (10_2) being detected if the values differ.

10. Safety system (4), the safety system (4) comprising:
- a first core (10_1) comprising:
∘ two first computation programs (16_1, 18_1) capable of performing the same operations, and
∘ a first stop program (PA_1) capable of implementing an emergency stop, and
- a second core (10_2) comprising:
∘ two second computation programs (16_2, 18_2) capable of performing the same operations, and
∘ a second stop program (PA_2) capable of implementing an emergency stop,
the safety system (4) being capable of carrying out the emergency stop method according to any one of claims 1 to 9.
